(19) Europäisches Patentamt
European Patent Office
Office européen des brevets

(11) **EP 1 827 950 B1**

(12) **EUROPÄISCHE PATENTSCHRIFT**

(45) Veröffentlichungstag und Bekanntmachung des Hinweises auf die Patenterteilung:
**28.05.2008 Patentblatt 2008/22**

(21) Anmeldenummer: **05850491.1**

(22) Anmeldetag: **22.12.2005**

(51) Int Cl.:
*B62D 15/02* (2006.01)    *G08G 1/16* (2006.01)

(86) Internationale Anmeldenummer:
**PCT/EP2005/057120**

(87) Internationale Veröffentlichungsnummer:
**WO 2006/069973 (06.07.2006 Gazette 2006/27)**

(54) **VERFAHREN ZUM ERMITTELN DER BEFAHRBARKEIT EINER PARKLÜCKE UND EINPARKHILFE-EINRICHTUNG**

METHOD FOR DETERMINING THE ABILITY TO ENTER A PARKING SPACE AND A PARKING ASSIST DEVICE

PROCEDE POUR DETERMINER SI UN VEHICULE PEUT SE GARER DANS UNE PLACE DE STATIONNEMENT ET DISPOSITIF D'AIDE AU STATIONNEMENT

(84) Benannte Vertragsstaaten:
**DE FR IT**

(30) Priorität: **24.12.2004 DE 102004062549**
**22.12.2005 DE 102005062086**

(43) Veröffentlichungstag der Anmeldung:
**05.09.2007 Patentblatt 2007/36**

(73) Patentinhaber: **Continental Teves AG & Co. oHG 60488 Frankfurt am Main (DE)**

(72) Erfinder: **LÜKE, Stefan 57462 Olpe (DE)**

(56) Entgegenhaltungen:
**WO-A-20/05085043        DE-A1- 19 922 173**
**FR-A- 2 728 859**

EP 1 827 950 B1

**Beschreibung**

Die Erfindung betrifft ein Verfahren zum Ermitteln der Befahrbarkeit einer Parklücke ausgehend von einer Ausgangsstellung eines Fahrzeugs.

Ferner betrifft die Erfindung eine Einparkhilfeeinrichtung, die zur Durchführung des Verfahrens geeignet ist.

FR2728859A offenbart bereits ein Verfahren zum Leiten eines Fahrzeugs in eine Parklücke. Bei dem Verfahren wird Jedem Punkt im Umfeld der Parklücke, von dem aus die Parklücke kollisionsfrei befahrbar ist, eine Lenkvorgabe zugeordnet, die dem Fahrer während des Einparkvorgangs angezeigt wird. Dabei entsteht ein Feld, das mehrere Bereiche aufweist, in denen Jeweils geradeaus, nach rechts oder nach links zu lenken ist, oder von denen aus zurückzufahren und der Einparkvorgang erneut zu starten ist.

Aus der DE 199 22 173 A1 geht eine automatische Lenkvorrichtung für ein Fahrzeug hervor, mit der das Fahrzeug in eine Parklücke gelenkt wird, die rechtwinklig zur ursprünglichen Fahrtrichtung ausgerichtet ist. Der Einparkvorgang erfolgt in zwei Zügen, ausgehend von einer fest vorgegebenen Startstellung des Fahrzeugs vor der Parklücke, die das Fahrzeug mit einem fest vorgegebenen Lenkwinkel einnehmen muss. Die Beziehungen zwischen den einzustellenden Lenkwinkeln und der während des Einparkvorgangs zurückgelegten Wegstrecke sind in einem Speichermittel in Form eines Kennfeldes gespeichert.

Die nach dem Prioritätsdatum veröffentlichte WO 2005 / 085043 beschreibt eine Einparkhilfe, bei der ein Fahrzeug auf einer Bahn, die in Form eines Polynoms berechnet wird, in eine Parklücke eingeparkt wird. Dabei ist es erforderlich zu überprüfen, ob die geplante Bahn von der Ausgangsstellung aus befahrbar ist. Dies wird durch die Auswertung eines Kennfeldes anhand der Fahrzeugposition, dem Fahrzeuggierwinkel und dem Fahrzeuglenkwinkel vorgenommen. Das Kennfeld wird vorher offline berechnet und Innerhalb des Fahrzeugs in einem Steuergerät hinterlegt.

In der deutschen Offenlegungsschrift DE 10 2005 006 966 A1 wird ein Verfahren zum Einparken eines Fahrzeugs beschrieben, bei dem eine Einparkbahn des Fahrzeugs aus einem festen Abschnitt im Bereich der Parklücke und einer Anfahrbahn mit einem Ansatzpunkt an den festen Abschnitt besteht. Die Anfahrbahn, die ausgehend von einer Ausgangsstellung bis zum dem Ansatzpunkt durchfahren wird, wird dabei in Form eines Polynoms berechnet. Dabei ist sicherzustellen, dass das Fahrzeug ausgehend von der Ausgangsstellung mit einem vorgegebenen Gierwinkel auf den festen Abschnitt der Einparkbahn bzw. in die Parklücke gesteuert werden kann.

Hierzu ist es bei dem bekannten Verfahren insbesondere vorgesehen, dass anhand der Fahrzeugposition, des Fahrzeuggierwinkels und des Fahrzeuglenkwinkels mittels eines Kennfeldes ermittelt wird, ob die Parklücke von einer gegebenen Ausgangsstellung aus befahrbar ist. Das Kennfeld wird dabei vorher (offline) berechnet und innerhalb des Fahrzeugs in einem Steuergerät hinterlegt.

Dabei müssen für eine Vielzahl möglicher Ausgangspositionen für einen Einparkvorgang jeweils der Gierwinkel und der Lenkwinkel in dem Steuergerät gespeichert werden, wodurch sich ein relativ großer Speicherbedarf für das Kennfeld ergibt.

Es ist daher eine Aufgabe der vorliegenden Erfindung, das Ermitteln der Befahrbarkeit einer Parklücke unter Heranziehung eines Kennfeldes zu ermöglichen und dabei den erforderlichen Speicherbedarf zur Speicherung des Kennfeldes zu reduzieren.

Erfindungsgemäß wird diese Aufgabe durch ein Verfahren mit den Merkmalen des Patentanspruchs 1 sowie durch eine Einparkhilfeeinrichtung mit den Merkmalen des Patentanspruchs 17 gelöst.

Demgemäß ist es vorgesehen, dass ein Verfahren der eingangs genannten Art so durchgeführt wird, dass die Befahrbarkeit anhand von zwei Kennfeldern ermittelt wird, wobei die beiden Kennfelder für mehrere vorgegebene Sätze von Werten erster Fahrzeuggrößen einen Minimalwert und einen Maximalwert für eine zweite Fahrzeuggröße angeben und wobei die ersten Fahrzeuggrößen und die zweite Fahrzeuggröße ausgewählt sind aus der Gruppe umfassend einen longitudinalen und einen lateralen Abstand des Fahrzeugs von der Parklücke, einen Gierwinkel des Fahrzeugs und einen Lenkwinkel an lenkbaren Rädern des Fahrzeugs.

Die erfindungsgemäße Einparkhilfeeinrichtung zum Ermitteln der Befahrbarkeit einer Parklücke ausgehend von einer Ausgangsstellung eines Fahrzeugs zeichnet sich dadurch aus, dass sie einen Speicher enthält, in dem zwei Kennfelder gespeichert sind, wobei die beiden Kennfelder für mehrere vorgegebene Sätze von Werten erster Fahrzeuggrößen einen Minimalwert und einen Maximalwert für eine zweite Fahrzeuggröße angeben und wobei die ersten Fahrzeuggrößen und die zweite Fahrzeuggröße ausgewählt sind aus der Gruppe umfassend einen longitudinalen und einen lateralen Abstand des Fahrzeugs von der Parklücke, einen Gierwinkel des Fahrzeugs und einen Lenkwinkel an lenkbaren Rädern des Fahrzeugs.

Die Erfindung beinhaltet somit die Idee, die Befahrbarkeit der Parklücke anhand von zwei Kennfeldern zu ermitteln. Die Kennfelder geben dabei für vorgegebene Sätze von Werten erster Fahrzeuggrößen einen Minimalwert bzw. einen Maximalwert für eine zweite Fahrzeuggröße an. Die Erfindung nutzt dabei die Erkenntnis, dass die Befahrbarkeit der Parklücke bei Vorliegen bestimmter Werte der ersten Fahrzeuggrößen für alle Werte der zweiten Fahrzeuggröße gegeben ist, die zwischen dem Minimalwert und dem Maximalwert liegen.

Es wurde zudem festgestellt, dass die beiden Kennfelder, welche die Minimalwerte und Maximalwerte für die zweite Fahrzeuggröße angeben, einen geringeren Speicherbedarf haben als ein einziges Kennfeld, welches für dieselben vorgegebenen Sätze von ersten Fahrzeuggrößen und vorgegebene Werte der zweiten Fahrzeuggröße die Befahrbarkeit der Parklücke angibt.

Weiterhin können zur Ermittlung der Befahrbarkeit der Parklücke vorteilhaft der laterale und der longitudinale Abstand des Fahrzeugs von der Parklücke, der Gierwinkel des Fahrzeugs und der Lenkwinkel des Fahrzeugs herangezogen werden. Unter dem lateralen Abstand des Fahrzeugs zu der Parklücke wird dabei der in Querrichtung zur Parklücke gemessene Abstand zwischen der Parklücke und dem Fahrzeug verstanden. Entsprechend ist der longitudinale Abstand des Fahrzeugs von der Parklücke der in Längsrichtung der Parklücke gemessene Abstand zwischen dem Fahrzeug und der Parklücke. Unter einem Abstand des Fahrzeugs von der Parklücke wird hier insbesondere der Abstand zwischen eine Aufpunkt des Fahrzeugs und einem Punkt der Parklücke verstanden.

In einer bevorzugten Ausführungsform des erfindungsgemäßen Verfahrens und der erfindungsgemäßen Einparkhilfeeinrichtung ist es vorgesehen, dass die Befahrbarkeit der Parklücke festgestellt wird, wenn der vorliegende Wert der zweiten Fahrzeuggröße zwischen dem durch die Kennfelder für die vorliegenden Werte der ersten Fahrzeuggrößen angegebenen Minimalwert und dem Maximalwert liegt.

Eine besonders vorteilhafte Ausführungsform des erfindungsgemäßen Verfahrens und der erfindungsgemäßen Einparkhilfeeinrichtung sieht vor, dass es sich bei der zweiten Fahrzeuggröße um den lateralen Abstand des Fahrzeugs von der Parklücke handelt.

Zudem zeichnet sich eine vorteilhafte Ausgestaltung des erfindungsgemäßen Verfahrens und der erfindungsgemäßen Einparkhilfeeinrichtung dadurch aus, dass es sich bei den ersten Fahrzeuggrößen um den longitudinalen Abstand des Fahrzeugs von der Parklücke und den Gierwinkel des Fahrzeugs handelt.

Eine ebenfalls bevorzugte Ausgestaltung des erfindungsgemäßen Verfahrens und der erfindungsgemäßen Einparkhilfeeinrichtung ist dadurch gekennzeichnet, dass es sich bei den ersten Fahrzeuggrößen um den longitudinalen Abstand des Fahrzeugs von der Parklücke, den Gierwinkel des Fahrzeugs und den Lenkwinkel an den lenkbaren Rädern des Fahrzeugs handelt.

In einer bevorzugten Weiterbildung des erfindungsgemäßen Verfahrens und der erfindungsgemäßen Einparkhilfeeinrichtung ist es vorgesehen, dass sich die durch die Kennfelder angegebenen Minimalwerte und Maximalwerte für die zweite Fahrzeuggröße auf das Einparken in eine Parklücke mit der für eine Befahrbarkeit kleinstmöglichen Längsausdehnung beziehen.

Hierdurch wird der Speicherbedarf weiter reduziert, da nicht für beliebige Längsausdehnungen einer Parklücke Kennfelder vorgesehen werden müssen.

Zweckmäßigerweise sieht eine Ausgestaltung des erfindungsgemäßen Verfahrens und der erfindungsgemäßen Einparkhilfeeinrichtung vor, dass eine Anpassung der Kennfelder an die Längsausdehnung die vorliegenden Parklücke erfolgt.

Bei einer besonders vorteilhaften Ausführungsform des erfindungsgemäßen Verfahrens und der erfindungsgemäßen Einparkhilfeeinrichtung ist es vorgesehen, dass die Anpassung erfolgt, indem der longitudinale Abstand des Fahrzeugs von der Parklücke mit einem Skalierungsfaktor skaliert wird.

Zudem ist es in einer besonders vorteilhaften Ausführungsform des erfindungsgemäßen Verfahrens und der erfindungsgemäßen Einparkhilfeeinrichtung vorgesehen, dass der Gierwinkel des Fahrzeugs als ein Winkel zwischen der Fahrzeuglängsrichtung und einer in Längsrichtung der Parklücke gerichteten x-Achse eines Koordinatensystems definiert ist, und dass die Anpassung erfolgt, indem der Gierwinkel in ein Koordinatensystem transformiert wird, dessen x-Achse mit einem Skalierungsfaktor skaliert ist.

Eine zweckmäßige Ausgestaltung des erfindungsgemäßen Verfahrens und der erfindungsgemäßen Einparkhilfeeinrichtung zeichnet sich dabei dadurch aus, dass der Skalierungsfaktor aus einem Verhältnis der Längsausdehnung der vorliegenden Parklücke zu der Längsausdehnung der Parklücke mit der für eine Befahrbarkeit kleinstmöglichen Längsausdehnung ermittelt wird.

In einer weiteren zweckmäßigen Ausgestaltung des erfindungsgemäßen Verfahrens und der erfindungsgemäßen Einparkhilfeeinrichtung dass der Skalierungsfaktor als Funktion der Längsausdehnung der vorliegenden Parklücke vorgegeben ist.

Im Allgemeinen entspricht ein Satz von vorliegenden Werten der ersten Fahrzeuggrößen nicht einem der anhand der Kennfelder vorgegebenen Sätze von Werten der ersten Fahrzeuggröße. Um die Befahrbarkeit der Parklücke in zuverlässiger und sicherer Weise ermitteln zu können, ist es im Rahmen der Erfindung vorgesehen, dass für den Satz von Ist-Werten der "ungünstigste" vorgegebenen Satz von Werten der ersten Fahrzeuggrößen ermittelt und der Ermittlung der Befahrbarkeit der Parklücke zugrunde gelegt wird.

Eine bevorzugte Weiterbildung des erfindungsgemäßen Verfahrens und der erfindungsgemäßen Einparkhilfeeinrichtung zeichnet sich daher dadurch aus, dass für einen Satz von vorliegenden Werten der ersten Fahrzeuggrößen mehrere vorgegebenen Sätze mit benachbarten Werten für die ersten Fahrzeuggrößen ermittelt werden und dass festgestellt wird, dass die Parklücke nicht befahrbar ist, wenn der für einen der ermittelten vorgegebenen Sätze angegebene Minimalwert der zweiten Fahrzeuggröße größer ist als der vorliegende Wert der zweiten Fahrzeuggröße.

Weiterhin ist es in einer bevorzugten Weiterbildung des erfindungsgemäßen Verfahrens und der erfindungsgemäßen Einparkhilfeeinrichtung vorgesehen, dass für einen Satz von vorliegenden Werten der ersten Fahrzeuggrößen mehrere vorgegebene Sätze mit benachbarten Werten für die ersten Fahrzeuggrößen ermittelt werden und dass festgestellt wird, dass die Parklücke nicht befahrbar ist, wenn der für einen der ermittelten vorgegebenen Sätze angegebene Maximalwert der zweiten Fahrzeuggröße kleiner ist als der vorliegenden Wert der zweiten Fahrzeuggröße.

Beispielsweise kann bei einen Einparken an Innenkurven oder beim Hinterschneiden der Parklücke die Parklücke auch dann befahrbar sein, wenn die zweite Fahrzeuggröße außerhalb des durch die Minimalwerte und Maximalwerte begrenzten Bereichs liegt.

In einer bevorzugten Ausführungsform des erfindungsgemäßen Verfahrens und der erfindungsgemäßen Einparkhilfeeinrichtung ist es vorgesehen, dass nach einem Passieren der Parklücke für aufeinanderfolgende Punkte einer Bahn des Fahrzeugs jeweils überprüft wird, ob die Parklücke bei dem vorliegenden Gierwinkel und dem vorliegenden Lenkwinkel von den Punkten aus befahrbar ist.

Eine vorteilhafte Weiterbildung des erfindungsgemäßen Verfahrens und der erfindungsgemäßen Einparkhilfeeinrichtung sieht daher vor, dass während einer Fahrt des Fahrzeugs in eine erste Fahrtrichtung die Lenkwinkelwerte des von dem Fahrer an den lenkbaren Rädern eingestellten Lenkwinkels und die zu den Lenkwinkelwerten gehörenden Werte des lateralen und des longitudinalen Abstandes des Fahrzeugs von der Parklücke gespeichert werden, nachdem festgestellt worden ist, dass die zweite Fahrzeuggröße den durch ein erstes Kennfeld angegebenen Minimalwert unterschritten oder den durch ein zweites Kennfeld angegebenen Maximalwert überschritten hat.

Auf diese Weise kann der nach dem Verlassen des durch die Kennfelder angegebenen gültigen Bereichs der möglichen Ausgangsstellungen für einen Einparkvorgang zurückgelegte Fahrweg in einfacher Weise zurückverfolgt und das Fahrzeug in den gültigen Bereich zurückgesteuert werden. Die entspricht einer Erweiterung des gültigen Bereichs.

Daher ist es in einer vorteilhaften Ausgestaltung des erfindungsgemäßen Verfahrens und der erfindungsgemäßen Einparkhilfeeinrichtung vorgesehen, dass während einer Fahrt des Fahrzeugs in eine zweite Fahrtrichtung mittels einer Lenkwinkelstelleinrichtung der gespeicherte Lenkwinkelwert für den Lenkwinkel der lenkbaren Räder des Fahrzeugs eingestellt wird, wenn der laterale und der longitudinale Abstand des Fahrzeugs von der Parklücke die zu dem Lenkwinkelwert gespeicherten Werte annehmen.

Vorzugsweise erfolgt dies nachdem der Fahrer das Fahrzeug angehalten und einen automatischen Einparkvorgang gestartet hat.

Eine zweckmäßige Weiterbildung des erfindungsgemäßen Verfahrens und der erfindungsgemäßen Einparkhilfeeinrichtung zeichnet sich daher dadurch aus, dass die gespeicherten Lenkwinkelwerte für den Lenkwinkel mittels der Lenkwinkelstelleinrichtung eingestellt werden, nachdem das Fahrzeug von dem Fahrer angehalten worden ist.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt

Fig. 1    eine schematische Darstellung eines zur Durchführung der Erfindung geeigneten Kraftfahrzeugs und

Fig. 2    eine schematische Darstellung einer Soll-Einparkbahn für einen Einparkvorgang sowie zwei Kennfelder, die einen gültigen Bereich möglicher Startpunkte für den Einparkvorgang begrenzen.

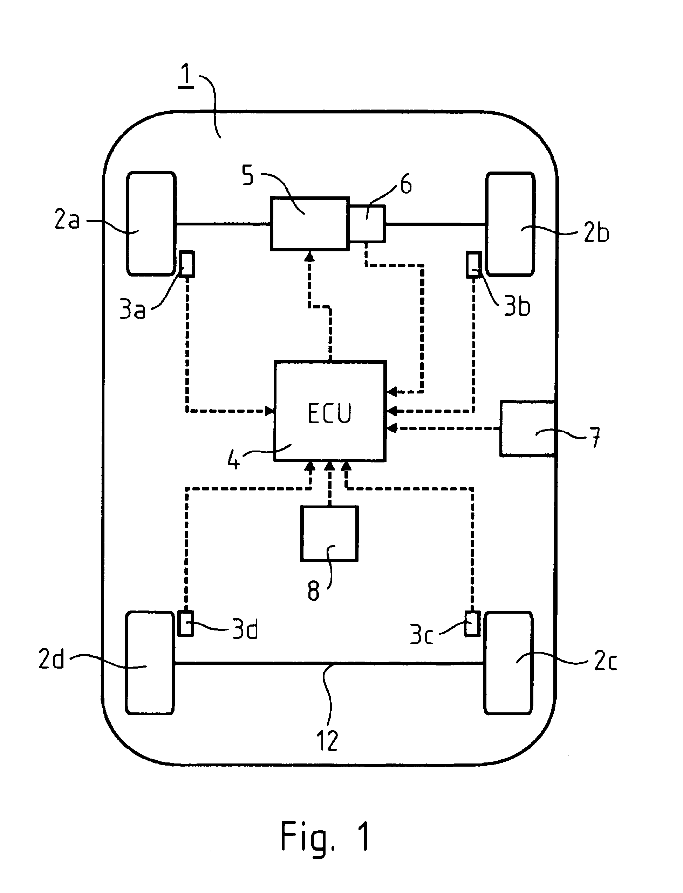

Das in Figur 1 schematisch dargestellte Kraftfahrzeug, das als Ganzes mit der Bezugsziffer 1 bezeichnet wird, verfügt über vier Räder 2a,...,2d, denen jeweils ein Raddrehzahlsensor 3a,...,3d zugeordnet ist, der signalmäßig mit einer Steuereinheit (ECU) 4 verbunden ist. Das Fahrzeug 1 verfügt über wenigstens zwei lenkbare Räder, bei denen es sich in der dargestellten Ausführungsform der Erfindung um die Vorderräder 2a, 2b handelt. Über einen Lenkstrang sind die Vorderräder 2a, 2b mit einem in Figur 11 nicht dargestellten Lenkbetätigungsmittel verbunden, mit dem der Fahrer des Fahrzeugs 1 einen Lenkwinkel an den Vorderrädern 2a, 2b einstellen kann. Ferner enthält der Lenkstrang vorzugsweise eine elektromechanische Stelleinrichtung 5, die unabhängig von der Fahrervorgabe ebenfalls das Einstellen eines Lenkwinkels oder eines für den Fahrer spürbaren Lenkmoments ermöglicht. Die Steuerbefehle zum Einstellen des Lenkwinkels oder des Lenkmoments erhält die Stelleinrichtung 5 von der Steuereinheit 4. Im Folgenden wird dabei beispielhaft davon ausgegangen, dass es sich bei der Stelleinrichtung 5 um eine Lenkwinkelstelleinrichtung handelt, die Steuerbefehle zum Einstellen eines Solllenkwinkels von der Steuereinheit 4 empfängt und umsetzt.

Zur Messung des an den Vorderrädern 2a, 2b vorliegenden Lenkwinkels $\delta$ enthält der Lenkstrang einen Lenkwinkelsensor 6, der signalmäßig mit der Steuereinheit 4 verbunden ist.

Aus den Signalen der Raddrehzahlsensoren 3a,...,3b kann in der Steuereinheit 4 insbesondere die Wegstrecke ermittelt werden, die das Fahrzeug 1 von einem bestimmten Startpunkt aus zurückgelegt hat. Die Richtung der Fahrzeugbewegung kann anhand des Signals des Lenkwinkelsensors 6 bestimmt werden. Somit kann jeweils die aktuelle Position des Fahrzeugs 1 relativ zu einem Bezugspunkt, wie beispielsweise der Ecke einer Parklücke, ermittelt werden.

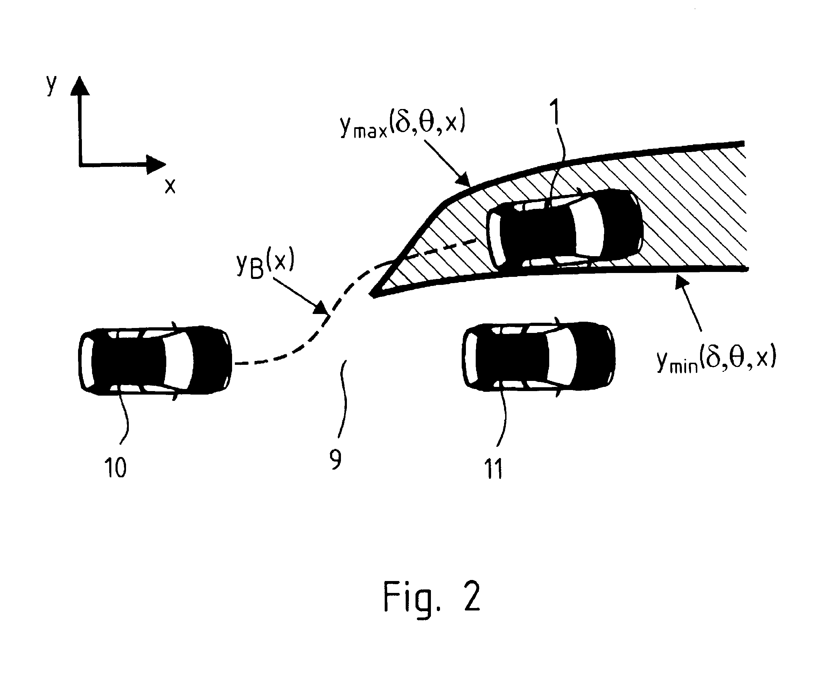

Ferner kann aus dem Raddrehzahl- und dem Lenkwinkelsignal der Gierwinkel $\theta$ des Fahrzeugs ermittelt werden, wobei unter dem Gierwinkel θ hier der Winkel zwischen der Fahrzeuglängsachse und der Längsachse der zu befahrenden Parklücke, d.h. der x-Achse des in Figur 2 dargestellten Koordinatensystems, verstanden wird.

Optional kann das Fahrzeug 1 in einer Ausführungsform der Erfindung über einen ebenfalls signalmäßig mit der Steuereinheit 4 verbundenen Gierratensensor 8 oder einen Gierwinkelsensor verfügen ist. Diese Sensoren können dabei zur Überprüfung bzw. Plausibilisierung des aus den Raddrehzahl- und Lenkwinkelsignalen errechneten Gierwinkels θ des Fahrzeugs 1 dienen.

Darüber hinaus verfügt das Fahrzeug 1 über wenigstens einen signalmäßig mit der Steuereinheit 4 verbundenen Umfeldsensor 7, mit dem zumindest Abstände zwischen dem Fahrzeug 1 und seitlich von dem Fahrzeug 1 befindlichen Objekten ermittelt werden können. Der Umfeldsensor 7 kann dabei beispielsweise als ein Radar-, Lidar-, Ultraschall- oder Infrarotsensor ausgeführt sein. Ferner kann es sich bei dem Umfeldsensor 7 auch um eine Kamera handeln, die Abbilder des Fahrzeugumfeldes liefert, aus denen insbesondere der Abstand zwischen dem Fahrzeug und seitlich von dem Fahrzeug befindlichen Objekten ermittelt werden kann.

Mittels der Steuereinheit 4 wird eine Einparkfunktion ausgeführt, bei der eine Parklücke automatisch vermessen und das Fahrzeug 1 automatisch in eine Parklücke eingeparkt wird. Vorzugsweise ist es vorgesehen, dass das Fahrzeug 1 während des Einparkvorgangs anhand von Steuerbefehlen der Steuereinheit 4 mittels der Stelleinrichtung 5 gelenkt wird, dass die Längsführung des Fahrzeugs, d.h. das Beschleunigen und Abbremsen, jedoch selbsttätig von dem Fahrer des Fahrzeugs 1 vorgenommen wird. Für den Einparkvorgang wird dabei in der Steuereinheit 4 ein Soll-Einparkbahn $y_B(x)$ ermittelt. Auf dieser Soll-Einparkbahn wird das Fahrzeugs 1 dann mittels einer in der Steuereinheit 4 enthaltenen Lenkwinkelregeleinheit gesteuert, wobei die Regeleinheit Stellbefehle an die Stelleinrichtung 5 übermittelt.

Vor dem Beginn des eigentlichen Einparkvorgangs werden zunächst die Größe der Parklücke und deren Position relativ zu dem Fahrzeug 1 mittels des Umfeldsensors 7 ermittelt. Dazu wird beispielsweise während der Vorbeifahrt an der Parklücke der Abstand zwischen dem Fahrzeug 1 und sich seitlich von dem Fahrzeug 1 befindlichen Objekten bestimmt. Die Teilstrecke, auf der dieser Abstand größer ist als auf den übrigen Teilstrecken, entspricht dabei der seitlichen Begrenzung der Parklücke.

Ausgehend von einem Startpunkt vor der Parklücke wird dabei anhand der Signale der Raddrehzahlsensoren 3a,...,3d und des Lenkwinkelsensors 6 kontinuierlich die Position des Fahrzeugs 1 in einem fest mit dem Startpunkt verbundenen Bezugssystem festgestellt. Unter Kenntnis der Position des Fahrzeugs und anhand der Abstandssignale des Umfeldsensors kann dabei die Position der Parklücke in dem Koordinatensystem ermittelt werden.

Somit ist nach dem Passieren der Parklücke die relative Position des Fahrzeugs 1 zu der Parklücke ermittelbar. Vorzugsweise ist es dabei vorgesehen, dass die Position eines Aufpunktes A des Fahrzeugs 1, beispielsweise des Mittelpunktes der Hinterachse 12 des Fahrzeugs 1 in einem Koordinatensystem bestimmt wird, dessen Ursprung sich in einem vorgegebenen Punkt der Parklücke, wie beispielsweise eine vorgegebenen Ecke der Parklücke, befindet.

Der von der Steuereinheit 4 gesteuerte Einparkvorgang wird ausgehend von einer Ausgangsstellung des Fahrzeugs 1 vorgenommen, die das Fahrzeug 1 nach dem Passieren der Parklücke einnimmt. Dabei kann es beispielsweise vorgesehen sein, dass dem Fahrer des Fahrzeugs 1 mittels eines Signals mitgeteilt wird, dass eine ausreichend große Parklücke ermittelt worden ist und der Fahrer das Fahrzeug 1 dann in einer Ausgangsstellung anhält und den Einparkvorgang startet. Im Rahmen der Erfindung ist es dabei vorgesehen, dass bei Beginn des Einparkvorgangs zunächst überprüft wird, ob die Parklücke ausgehend von der Startstellung kollisionsfrei befahrbar ist.

In einer weiteren Ausführungsform der Erfindung kann es vorgesehen sein, dass dem Fahrer nach dem Passieren der Parklücke kontinuierlich mitgeteilt wird, ob sich das Fahrzeug 1 in einer Stellung befindet, aus der die Parklücke befahrbar ist. Erkennt der Fahrer anhand dieser Mitteilung, dass das Fahrzeug 1 eine solche Stellung einnimmt, kann er das Fahrzeug 1 anhalten und den Einparkvorgang starten.

In Figur 2 ist ein Parklücke 9 dargestellt, die in ihrer Längsausdehnung von zwei Fahrzeugen 10 und 11 begrenzt wird. Es kann sich dabei beispielsweise um zwei am Straßenrand parkende Fahrzeuge 10, 11 handeln. Ferner ist beispielhaft eine Soll-Einparkbahn $y_B(x)$ dargestellt.

Die Befahrbarkeit der Parklücke 9 ausgehend von einer vorgegebenen Position des Fahrzeugs 1 wird im Rahmen der Erfindung anhand von zwei Kennfeldern ermittelt. Für vorgegebene Sätze erster Fahrzeuggrößen gibt dabei ein erstes Kennfeld jeweils einen Minimalwert und ein zweites Kennfeld jeweils einen Maximalwert für einen Wert einer zweiten Fahrzeuggröße an. Die ersten Fahrzeuggrößen und die zweite Fahrzeuggrößen entsprechen dabei den für die Ermittlung der Befahrbarkeit maßgeblichen Fahrzeuggrößen, bei denen es sich um den lateralen Abstand (Abstand in y-Richtung) und den longitudinalen Abstand (Abstand in x-Richtung) des Fahrzeugs 1 von der Parklücke 9, den Gierwinkel des Fahrzeugs 1 sowie den Lenkwinkel an den lenkbaren Rädern 2a, 2b des Fahrzeugs handelt.

Durch die Kennfelder wird damit ein gültiger Bereich angegeben, von dem aus das Einparken des Fahrzeugs 1 in die Parklücke 9 möglich ist.

Die Ermittlung der Befahrbarkeit der Parklücke 9 wird in einer bevorzugten Ausführungsform der Erfindung anhand von zwei Kennfeldern $y_{min}(\delta,\theta,x)$ und $y_{max}(\delta,\theta,x)$ ermittelt. Das Kennfeld $y_{min}(\delta,\theta,x)$ gibt dabei die untere Grenze und das Kennfeld $y_{max}(\delta,\theta,x)$ die obere Grenze für die y-Koordinate des Aufpunktes A des Fahrzeugs 1 an, für die ein Einparken bei einem gegebenen Lenkwinkel δ und einem gegebenen Gierwinkel θ des Fahrzeugs 1 sowie einer gegebenen x-Koordinate des Aufpunktes A des Fahrzeugs 1 möglich ist.

Der somit für einen gegebenen Gierwinkel und einen gegebenen Lenkwinkel anhand der Kennfelder $y_{min}(\delta, \theta, x)$ und $y_{max}(\delta, \theta, x)$ begrenzte gültige Bereich ist in Figur 2 anhand einer schraffierten Fläche dargestellt.

Die Kennfelder $y_{min}(\delta, \theta, x)$ und $y_{max}(\delta, \theta, x)$ sind in der Steuereinheit 4 gespeichert, wobei für verschiedene Kombinationen diskreter Werte für den Lenkwinkel $\delta$, den Gierwinkel $\theta$ und die x-Koordinate des Aufpunktes A des Fahrzeugs 1 jeweils ein Wert $y_{min}$ und $y_{max}$ gespeichert ist. Es besteht somit ein Raster von Kennfeldpunkten in einem $(\delta, \theta, x)$-Raum, bei dem für jeden Kennfeldpunkt jeweils ein Wert für $y_{min}$ und $y_{max}$ in der Steuereinheit 4 abgelegt ist.

Es lässt sich zeigen, dass die Parklücke 9 bei einem vorliegenden Wertetripel $(\delta, \theta, x)$ der Werte für den Gierwinkel, den Lenkwinkel und die x-Koordinaten des Aufpunktes A des Fahrzeugs 1 für alle lateralen Abstände y des Aufpunktes A des Fahrzeugs 1 von der Parklücke 9, die zwischen $y_{min}$ und $y_{max}$ liegen, befahrbar ist.

Die in der Steuereinheit 4 gespeicherten Kennfelder beziehen sich auf die kleinstmögliche Parklücke, d.h. die Parklücke mit der geringsten Längsausdehnung (Ausdehnung in x-Richtung), bei der ein Einparken gerade noch möglich ist. Liegt eine Parklücke mit größerer Längsausdehnung vor, so wird die ermittelte Position des Fahrzeugs 1 bzw. des Aufpunktes A durch eine Skalierung der x-Koordinate des Aufpunktes A in das Koordinatensystem transformiert, in dem die Kennfelder definiert sind. Ferner wird auch der ermittelte Gierwinkel des Fahrzeugs 1 in dieses Koordinatensystem transformiert. Der Gierwinkel des Fahrzeugs 1 ist der Winkel zwischen der Fahrzeuglängsrichtung und der in Längsrichtung der Parklücke 9 gerichteten x-Achse des Koordinatensystems, so dass die Anpassung erfolgt, indem der Gierwinkel in ein Koordinatensystem transformiert wird, dessen x-Achse mit dem Skalierungsfaktor skaliert ist.

Der Skalierungsfaktor zur Skalierung der x-Koordinaten wird dabei aus dem Verhältnis zwischen der Längsausdehnung der kleinstmöglichen Parklücke und der Längsausdehnung der vorliegenden Parklücke 9 bestimmt. Ferner wird überprüft, ob sich der minimale Abstand zwischen der vorderen rechten Ecke des einzuparkenden Fahrzeugs 1 und der hinteren linken Ecke der vorderen Parklückenbegrenzung (d.h. dem Fahrzeug 11) bei einem Einparken nach rechts bzw. der minimale Abstand zwischen der vorderen linken Ecke des einzuparkenden Fahrzeugs 1 und hinteren rechten Ecke der vorderen Parklückenbegrenzung bei einem Einparken nach links aufgrund der Skalierung gegenüber dem Einparken in die kleinstmögliche Parklücke anhand der entsprechenden Soll-Einparkbahn verändert. Falls dabei festgestellt wird, dass sich dieser anhand des Kennfeldes $y\text{-}_{min}(\delta, \theta, x)$ angegebene minimale Abstand verringert, so wird ein größerer Skalierungsfaktor verwendet.

Der Skalierungsfaktor kann dabei auch offline für verschiedene Parklückenlängen berechnet als Funktion der Länge der der vorliegenden Parklücke 9 innerhalb der Steuereinheit 4 abgelegt werden. Anhand dieser Funktion kann dann zu Beginn des Einparkvorgangs der Skalierungsfaktor aus der Länge der vorliegenden Parklücke 9 ermittelt werden.

In einer Ausführungsform der Erfindung kann es ebenfalls vorgesehen sein, dass anstelle der Fahrzeugposition und des Gierwinkels die Kennfelder selbst anhand eines Skalierungsfaktors in der x-Koordinate skaliert werden. Eine diesen Skalierungsfaktor angebende Funktion wird vorzugsweise offline für verschiedene Parklückenlängen berechnet und innerhalb der Steuereinheit 4 als Funktion der Längsausdehnung der vorliegenden Parklücke abgelegt. Dabei kann es insbesondere auch vorgesehen sein, dass die Skalierung in unterschiedlichen Bereichen der x-Koordinaten der Kennfelder anhand dieser Funktion in unterschiedlicher Weise vorgenommen wird.

Im Folgenden wird dabei davon ausgegangen, dass eine Skalierung der x-Koordinate des Aufpunktes A des Fahrzeugs 1 und des Gierwinkels durchgeführt worden ist oder das eine Skalierung der Kennfelder vorgenommen worden ist.

Es ist im Rahmen der Erfindung gleichfalls möglich, anstelle der Kennfelder $y_{min}(\delta, \theta, x)$ und $y_{max}(\delta, \theta, x)$ andere Kennfelder einzusetzen, wie weiter unten noch genauer beschrieben wird. Im Folgenden wird die Erfindung jedoch zunächst am Beispiel der Kennfelder $y_{min}(\delta, \theta, x)$ und $y_{max}(\delta, \theta, x)$ näher erläutert.

Um die Befahrbarkeit der Parklücke 9 anhand dieser Kennfelder zu ermitteln, wird für den vorliegenden Lenk-winkel $\delta$, den vorliegenden Gierwinkel $\theta$ und die für den Aufpunkt A des Fahrzeugs 1 ermittelte x-Koordinate überprüft, ob für die y-Koordinate des Aufpunktes A die Bedingung

$$y_{min}(\delta, \theta, x) \;<\; y \;<\; y_{max}(\delta, \theta, x)$$

erfüllt ist. Ist dies der Fall, wird die Befahrbarkeit der Parklücke 9 festgestellt und dem Fahrer dies signalisiert. Ist die Bedingung nicht erfüllt, so wird festgestellt, dass die Parklücke 9 ausgehend von der vorliegenden Stellung des Fahrzeugs 1 nicht befahrbar ist.

Im Allgemeinen wird das vorliegenden Wertetripel $(\delta, \theta, x)$ jedoch nicht mit einem der in der Steuereinheit 4 gespeicherten Wertetripel übereinstimmen. Die Ermittlung der für die Überprüfung heranzuziehenden in der Steuereinheit 4 gespeicherten Wertetripel erfolgt dabei im Rahmen der Erfindung in einem sicheren Ansatz, wobei für ein Wertetripel $(\delta, \theta, x)$ mit den in dem aktuellen Zustand des Fahrzeugs 1 vorliegenden Werten das "ungünstigste" in der Steuereinheit 4 gespeicherte benachbarte Wertetripel ermittelt wird.

Dabei werden für das vorliegenden Wertetripel $(\delta,\theta,x)$ zunächst die benachbarten Wertetripel ermittelt, d.h. die Wertetripel deren einzelne Werte den vorliegenden Werten der entsprechenden Größen benachbart sind. Dann werden die den ermittelten Wertetripeln zugeordneten Werte $y_{min}$ und $y_{max}$ bestimmt. Anschließend wird überprüft, ob die vorliegende y-Koordinaten des Aufpunktes A des Fahrzeugs 1 kleiner als einer der bestimmten $y_{min}$-Werte oder größer als einer der bestimmten $y_{max}$-Werte ist. Ist dies der Fall, so wird festgestellt, dass die Parklücke 9 nicht befahrbar ist. Ist dies nicht der Fall, wird festgestellt, dass die Parklücke 9 ausgehend von der vorliegenden Stellung des Fahrzeugs 1 befahrbar ist.

Zur Ermittlung der Kennfelder $y_{min}(\delta,\theta,x)$ und $y_{max}(\delta,\theta,x)$ wird der Startraum mit den möglichen Ausgangstellung für einen Einparkvorgang diskretisiert, d.h. es wird ein Gitter von Punkten des Startraums definiert. Für die Gitterpunkte wird dann der Einparkvorgang für verschiedene Gierwinkel $\theta$ und Lenkwinkel $\delta$ simuliert, um zu überprüfen, ob ein Einparken möglich ist. Auf diese Weise kann ein vierdimensionales Kennfeld $f(\delta,\theta,x,y)$ gewonnen werden, in dem alle möglichen Kombinationen der Startwerte $(\delta,\theta,x,y)$ angegeben werden, bei denen ein Einparkvorgang möglich ist. Aus dem Kennfeld $f(\delta,\theta,x,y)$ können dann die Kennfelder $y_{min}(\delta,\theta,x)$ und $y_{max}(\delta,\theta,x)$ bestimmt werden, die in der Steuereinheit 4 gespeichert werden.

Wie zuvor erwähnt, können jedoch auch andere Kennfelder zur Bestimmung der Befahrbarkeit der Parklücke 9 herangezogen werden, die ebenfalls aus dem Kennfeld $f(\delta,\theta,x,y)$ ermittelbar sind. Grundsätzlich können dabei beliebige Kennfelder $z_{1,min}(z_2,z_3,z_4)$ und $z_{1,max}(z_2,z_3,z_4)$ mit paarweise verschiedenen $z_i \in \{\delta,\theta,x,y\}$ bestimmt werden, welche für vorgegebenen Sätze $(z_2,z_3,z_4)$ von Werten erster Fahrzeuggrößen einen Minimalwert $z_{1,min}$ bzw. einen Maximalwert $z_{1,max}$ einer zweiten Fahrzeuggröße $z_1$ angeben. Die Befahrbarkeit der Parklücke 9 wird dabei festgestellt, wenn für den Wert von $z_1$ bei gegebenen Werten von $z_2$, $z_3$ und $z_4$ gilt:

$$z_{1,min}(z_2,z_3,z_4) \ < \ z_1 \ < \ z_{1,max}(z_2,z_3,z_4)$$

Ein konkretes Beispiel für weitere mögliche Kennfelder sind dabei die Kennfelder $\theta_{min}(\delta,x,y)$ und $\theta_{max}(\delta,x,y)$, die für vorgegebene Wertetripel $(\delta,x,y)$ jeweils einen Minimalwert $\theta_{min}(\delta,x,y)$ und einen Maximalwert $\theta_{max}(\delta,x,y)$ für den Gierwinkel $\theta$ des Fahrzeugs 1 angeben.

Grundsätzlich wäre es ebenfalls möglich, die Befahrbarkeit der Parklücke 9 anhand des Kennfeldes $f(\delta,\theta,x,y)$ zu ermitteln. Dieses umfasst jedoch bei gleicher Abdeckung des gültigen Bereichs erheblich mehr Stützpunkte als die zwei Kennfelder, welchen einen Minimal- und einen Maximalwert für eine Fahrzeuggröße angeben. Durch den Einsatz zweier Kennfelder kann somit ein erheblicher Speicherplatz in der Steuereinheit 4 eingespart werden.

Wie bereits erwähnt, ist es in einer Ausführungsform der Erfindung vorgesehen, dass nach dem Passieren der Parklücke in Taktschritten einer vorgegebenen Taktdauer - d.h. für aufeinanderfolgende Punkte der Bahn des Fahrzeugs 1 bzw. des Aufpunktes A des Fahrzeugs 1 - überprüft wird, ob die vorliegende Stellung des Fahrzeugs 1 das Einparken in die Parklücke 9 zulässt. Die Taktdauer wird dabei vorzugsweise so gewählt, dass ein quasi-kontinuierliche Überprüfung der Befahrbarkeit der Parklücke 9 vorgenommen wird.

In einer vorteilhaften Weiterbildung der Erfindung ist es vorgesehen, dass nach dem Verlassen des durch die Kennfelder angegebenen gültigen Bereichs die Bahn des Aufpunktes A des Fahrzeugs 1 sowie die jeweils an den Bahnpunkten durch eingestellten Lenkwinkel in der Steuereinheit 4 gespeichert. Auf diese Weise kann die Bahn nach dem Beginn des Einparkvorgangs an einem Startpunkt außerhalb des gültigen Bereichs in den gültigen Bereich zurückverfolgt werden. Dadurch ist es möglich, Hinterschneidungen oder das Einparken an Innenkurven zu berücksichtigen, da die Bahn bereits einmal abgefahren wurde und diese damit unter der Annahme stationärer Verhältnisse hindernisfrei ist.

In dieser Ausführungsform der Erfindung wird dem Fahrer - nachdem das Fahrzeug 1 in den gültigen Bereich gelangt ist - nach dem Verlassen dieses Bereichs nicht angezeigt, dass die Parklücke 9 nicht befahrbar ist. Vielmehr kann der Fahrer den Einparkvorgang auch außerhalb des gültigen Bereichs starten. Nach dem Starten des Einparkvorgangs wird das Fahrzeug 1 dann anhand der gespeicherten Bahnpunkte sowie der zugehörigen Lenkwinkel mittels der Steuereinheit 4 in den gültigen Bereich zurückgesteuert. Die Steuereinheit 4 übermittelt dazu Stellbefehle an die Stelleinrichtung 5, mit denen an jedem Bahnpunkt der zuvor für diesen Bahnpunkt gespeicherte Lenkwinkel eingestellt wird. Somit wird das Fahrzeug auf einer Bahn, die es nach dem Verlassen des gültigen Bereichs in einer Fahrtrichtung, üblicherweise in Vorwärtsrichtung, befahren hat, in entgegengesetzter Fahrtrichtung, üblicherweise in Rückwärtsrichtung, in den gültigen Bereich zurückgesteuert.

Nachdem das Fahrzeug 1 auf diese Weise wieder in den gültigen Bereich gelangt ist, kann der Einparkvorgang dann in einer dem Fachmann bekannten Art und Weise durchgeführt werden, beispielsweise so, wie es in der deutschen Offenlegungsschrift DE 10 2005 006 966 A1 dargestellt ist.

**Patentansprüche**

1.  Verfahren zum Ermitteln der Befahrbarkeit einer Parklücke ausgehend von einer Ausgangsstellung eines Fahrzeugs, **dadurch gekennzeichnet,**
    **dass** die Befahrbarkeit anhand von zwei Kennfeldern ($y_{min}(\delta,\theta,x)$; $y_{max}(\delta,\theta,x)$) ermittelt wird, wobei die Kennfeldor in einer Steuereinheit des Fahrzeugs gespeichert sind und wobei für mehrere vorgegebene sätze von Werten erster Fahrzeuggrößen ($\delta$; $\theta$; x) ein erstes Kennfeld ($y_{min}(\delta,\theta,x)$ jeweils einen Minimalwert ($y_{min}(\delta,0,x)$) einer zweiten Fahrzeuggröße (y) angibt und ein zweites Kennfeld ($y_{max}(\delta,\theta,x)$) jeweils einen Maximalwert ($y_{max}(\delta,\theta,x)$) der zweiten Fahrzeuggröße (y) angibt, wobei die ersten Fahrzeuggrößon ($\delta$; $\theta$; x) und die zweite Fahrzeuggröße (y) ausgewählt sind aus der Gruppe umfassend einen longitudinalen (x) und einen lateralen (y) Abstand des Fahrzeugs (1) von der Parklücke (9), einen Winkel (0) zwischen einer Längsachse des Fahrzeugs (1) und einer Längsachse der zu befahrenden Parklücke (9) sowie einen Lenkwinkel ($\delta$) an lenkbaren Rädern (2a, 2b) des Fahrzeugs (1), und wobei die Befahrbarkeit der Parklücke (9) festgestellt wird, wenn der vorliegende Wert der zweiten Fahrzeuggröße (y) zwischen dem durch die Kennfelder ($y_{min}(\delta,\theta,x)$; $y_{max}(\delta,\theta,x)$) für die vorliegenden Werte der ersten Fahrzeuggrößen ($\delta$; $\theta$; x) angegebenen Minimalwert ($y_{min}(\delta,\theta,x)$) der zweiten Fahrzeuggröße (y) und dem Maximalwert ($y_{max}(\delta,0,x)$) der zweiten Fahrzeuggröße (y) liegt.

2.  Verfahren nach Anspruch 1,
    **dadurch gekennzeichnet,**
    **dass** es sich bei der zweiten Fahrzeuggröße (y) um den lateralen Abstand (y) des Fahrzeugs (1) von der Parklücke (9) handelt.

3.  Verfahren nach einem der vorangegangenen Ansprüche,
    **dadurch gekennzeichnet,**
    **dass** es sich bei den ersten Fahrzeuggrößen ($\delta$; $\theta$; x) um den longitudinalen Abstand (x) des Fahrzeugs (1) von der Parklücke (9) und den Winkel ($\theta$) zwischen der Längsachse des Fahrzeugs (1) und der Längsachse der zu befahrenden Parklücke (9) handelt.

4.  Verfahren nach einem der vorangegangenen Ansprüche,
    **dadurch gekennzeichnet,**
    **dass** es sich bei den ersten Fahrzeuggrößen ($\delta$; $\theta$; x) um den longitudinalen Abstand (x) des Fahrzeugs (1) von der Parklücke (9), den Winkel (0) zwischen der Längsachse des Fahrzeugs (1) und der Längsachse der zu befahrenden Parklücke (9) und den Lenkwinkel ($\delta$) an den lenkbaren Rädern (2a, 2b) des Fahrzeugs (1) handelt.

5.  Verfahren nach einem der vorangegangenen Anspruche,
    **dadurch gekennzeichnet,**
    **dass** sich die durch die Kennfelder ($y_{min}(\delta,0,x)$; $y_{max}(\delta,\theta,x)$) angegebenen Minimalwerte ($y_{min}(\delta,0,x)$) und Maximalwerte ($y_{max}(\delta,\theta,x)$) für die zweite Fahrzeuggröße (y) auf das Einparken in eine Parklücke mit der für eine Befahrbarkeit kleinstmöglichen Längsausdehnung beziehen.

6.  Verfahren nach Anspruch 5,
    **dadurch gekennzeichnet,**
    **dass** eine Anpassung der Kennfelder ($y_{min}(\delta,\theta,x)$; $y_{max}(\delta,0,x)$) an die Längsausdehnung der vorliegenden Parklücke (9) erfolgt.

7.  Verfahren nach Anspruch 6,
    **dadurch gekennzeichnet,**
    **dass** die Anpassung erfolgt, indem der longitudinale Abstand (x) des Fahrzeugs (1) von der Parklücke (9) mit einem Skalierungsfaktor skaliert wird.

8.  Verfahren nach einem der Ansprüche 6 oder 7,
    **dadurch gekennzeichnet,**
    **dass** die Anpassung erfolgt, indem Winkel ($\theta$) zwischen der Längsachse des Fahrzeugs (1) und der Längsachse der zu befahrenden Parklücke (9)in ein Koordinatensystem transformiert wird, dessen x-Achse mit einem Skalierungsfaktor skaliert ist.

9.  Verfahren nach einem der Ansprüche 6 bis 8,
    **dadurch gekennzeichnet,**

**dass** der Skalierungsfaklor aus einem Verhältnis der Längsausdehnungen der vorliegenden Parklücke (9) zu der Längsausdehnung der Parklücke mit der für eine Befahrbarkeit kleinstmöglichen Tängsausdohnung ermittelt wird.

10. Verfahren nach einem der Ansprüche 7 bis 9,
**dadurch gekennzeichnet,**
**dass** der Skalierungsfaktor als Funktion der Längsausdehnung der vorliegenden Parklücke (9) vorgegeben ist.

11. Verfahren nach einem der vorangegangenen Ansprüche,
**dadurch gekennzeichnet,**
**dass** für einen Satz von vorliegenden Werten der ersten Fahrzeuggrößen ($\delta$; $\theta$; x) mehrere vorgegebene Sätze mit benachbarten Werten für die ersten Fahrzeuggrößen ($\delta$; $\theta$; x) ermittelt werden und dass festgestellt wird, dass die Parklücke (9) nicht befahrbar ist, wenn der für einen der ermittelten vorgegebenen Sätze angegebene Minimalwert ($y_{min}(\delta,\theta,x)$) der zweiten Fahrzeuggröße (y) größer ist als der vorliegende Wert der zweiten Fahrzeuggröße (y).

12. Verfahren nach einem der vorangegangenen Ansprüche,
**dadurch gekennzeichnet,**
**dass** für einen Satz von vorliegenden Werten der ersten Fahrzeuggrößen ($\delta$; $\theta$; x) mehrere vorgegebene Sätze mit benachbarten Werten für die ersten Fahrzeuggrößen ($\delta$; $\theta$; x) ermitteil werden und dass festgestellt wird, dass die Parklücke (9) nicht befahrbar ist, wenn der für einen der ermittelten vorgegebenen Sätze angegebene Maximalwert ($y_{max}(\delta,0,x)$) der zweiten Fahrzeuggröße (y) kleiner ist als der vorliegende Wert der zweiten Fahrzeuggröße (y).

13. Verfahren nach einem der vorangegangenen Ansprüche,
**dadurch gekennzeichnet,**
**dass** nach einem Passieren der Parklücke (9) für aufeinanderfolgende Punkte einer Bahn des Fahrzeugs (1) jeweils überprüft wird, ob die Parklücke (1) bei dem vorliegenden Winkel ($\theta$) zwischen der Längsachse des Fahrzeugs (1) und der Längsachse der zu befahrenden Parklücke (9) und dem vorliegenden Lenkwinkel ($\delta$) von den Punkten aus befahrbar ist.

14. Verfahren nach einem der vorangegangenen Ansprüche,
**dadurch gekennzeichnet,**
**dass** während einer Fahrt des Fahrzeugs (1) in eine erste Fahrtrichtung die Lenkwinkelwerte des von dem Fahrer an den lenkbaren Rädern eingestellten Lenkwinkels ($\delta$) und die zu den Lenkwinkelwerten gehörenden Werte des lateralen (y) und des longitudinalen (x) Abstandes des Fahrzeugs (1) gespeichert werden, nachdem festgestellt worden ist, dass die zweite Fahrzeuggröße (y) den durch ein erstes Kennfeld (($y_{min}(\delta,\theta,x)$) angegebenen Minimalwert ($y_{min}(\delta,\theta,x)$) unterschritten hat oder den durch ein zweites Kennfeld ($y_{max}(\delta,\theta,x)$) angegebenen Maximalwert ($y_{max}(\delta,0,x)$) überschritten hat.

15. Verfahren nach Anspruch 13,
**dadurch gekennzeichnet,**
**dass** während einer Fahrt des Fahrzeugs (1) in eine zweite Fahrtrichtung mittels einer Lenkwinkelstelleinrichtung (5) der gespeicherte Lenkwinkelwert für den Lenkwinkel ($\delta$) der lenkbaren Räder (2a, 2b) des Fahrzeugs (1) eingestellt wird, wenn der laterale (y) und der longitudinale (x) Abstand des Fahrzeugs (1) von der Parklücke (9) die zu dem Lenkwinkelwert gespeicherten Werte annehmen.

16. Verfahren nach Anspruch 13 oder 14,
**dadurch gekennzeichnet,**
**dass** die gespeicherten Lenkwinkelwerte für den Lenkwinkel ($\delta$) mittels der Lonkwinkelstelleinrichtung (5) eingestellt werden, nachdem das Fahrzeug (1) von dem Fahrer angehalten worden ist.

17. Einparkhilfeeinrichtung zum Ermitteln der Befahrbarkeit einer Parklücke ausgehend von einer Ausgangsstellung eines Fahrzeugs,
**dadurch gekennzeichnet,**
**dass** sie einen Speicher enthält, in dem zwei Kennfelder ($y_{min}(\delta,\theta,x)$; $y_{max}(\delta,\theta,x)$) gespeichert sind, wobei für mehrere vorgegebene sätze von Werten erster Fahrzeuggrößen ($\delta$; $\theta$; x) ein erstes Kennfeld ($y_{min}(\delta,\theta,x)$) jeweils einen Minimalwert ($y_{min}(\delta,\theta,x)$) einer zweiten Fahrzeuggröße (y) angibt und ein zweites Kennfeld ($y_{max}(\delta,0,x)$) jeweils einen Maximalwert ($y_{max}(\delta,\theta,x)$) der zweite Fahrzeuggröße (y) angibt, und wobei die ersten Fahrzeuggrößen ($\delta$; $\theta$; x) und die zweite Fahrzeuggröße (y) ausgewählt sind aus der Gruppe umfassend einen longitudinalen (x) und einen lateralen (y) Abstand des Fahrzeugs (1) von der Parklücke (9), einen Winkel ($\theta$) Zwischen einer Längsachse des Fahrzeugs (1) und einer Längsachse der zu befahrenden Parklücke (9) sowie einen Lenkwinkel ($\delta$) an lenkbaren Rädern (2a, 2b) des Fahrzeugs (1) und wobei die Befahrbarkeit der Parklücke (9) festgestellt wird, wenn der vorliegende Wert der zweiten Fahrzeuggröße (y) zwischen dem durch die Kennfelder ($y_{min}(\delta,\theta,x)$; $y_{max}(\delta,\theta,x)$) für die vorliegenden Werte der ersten Fahrzeuggrößen ($\delta$; $\theta$; x) angegebenen Minimalwert ($y_{min}(\delta,\theta,x)$) der zweiten Fahrzeuqgröße (y) und dem MaximalwerL ($y_{max}(\delta,0,x)$) der zweiten Fahrzeuggröße (y) liegt.

**Claims**

1. Method of determining the ability to enter a parking gap starting from an initial position of a vehicle, **characterized in that** the negotiability is determined by way of two characteristic diagrams ($y_{min}(\delta,\theta,x)$; $y_{max}(\delta,\theta,x)$), in which case the two characteristic diagrams are saved in a control unit of the vehicle and a first characteristic diagram ($y_{min}(\delta,\theta,x)$ indicates respectively one minimum value ($y_{min}(\delta,\theta,x)$) of a second vehicle quantity (y) and a second characteristic diagram $y_{max}(\delta,\theta,x)$) indicates respectively one maximum value ($y_{max}(\delta,\theta,x)$) of the second vehicle quantity (y) for several predetermined sets of values of first vehicle quantities ($\delta$; $\theta$; x), with the first vehicle quantities ($\delta$; $\theta$; x) and the second vehicle quantity (y) being selected from the group comprising a longitudinal distance (x) and a lateral distance (y) of the vehicle (1) from the parking gap (9), an angle ($\theta$) between a longitudinal axis of the vehicle (1) and a longitudinal axis of the parking gap (9) to be entered as well as a steering angle ($\delta$) at steerable wheels (2a, 2b) of the vehicle (1), and in which case the negotiability of the parking gap (9) is established when the present value of the second vehicle quantity (y) lies between the minimum value ($y_{min}(\delta,\theta,x)$) of the second vehicle quantity (y) that is indicated by the characteristic diagrams $y_{min}(\delta,\theta,x)$; $y_{max}(\delta,\theta,x)$) for the present values of the first vehicle quantities ($\delta$; $\theta$; x) and the maximum value ($y_{max}(\delta,\theta,x)$) of the second vehicle quantity (y).

2. Method as claimed in claim 1, **characterized in that** the second vehicle quantity (y) is the lateral distance (y) of the vehicle (1) from the parking gap (9).

3. Method as claimed in any one of the preceding claims, **characterized in that** the first vehicle quantities ($\delta$; $\theta$; x) relate to the longitudinal distance (x) of the vehicle (1) from the parking gap (9) and the angle($\theta$) between the longitudinal axis of the vehicle (1) and the longitudinal axis of the parking gap (9) to be entered.

4. Method as claimed in any one of the preceding claims, **characterized in that** the first vehicle quantities ($\delta$; $\theta$; x) relate to the longitudinal distance (x) of the vehicle (1) from the parking gap (9), the angle ($\theta$) between the longitudinal axis of the vehicle (1) and the longitudinal axis of the parking gap (9) to be entered and the steering angle ($\delta$) at the steerable wheels (2a, 2b) of the vehicle (1).

5. Method as claimed in any one of the preceding claims, **characterized in that** the minimum values ($y_{min}(\delta,\theta,x)$) and maximum values ($y_{max}(\delta,\theta,x)$) for the second vehicle quantity (y) indicated by the characteristic diagrams ($y_{min}(\delta,\theta,x)$; $y_{max}(\delta,\theta,x)$) relate to the manoeuvre of pulling up into a parking gap with the smallest possible longitudinal extension for negotiability.

6. Method as claimed in claim 5, **characterized in that** the characteristic diagrams ($y_{min}(\delta,\theta,x)$; $y_{max}(\delta,\theta,x)$) are adapted to the longitudinal extension of the present parking gap (9).

7. Method as claimed in claim 6, **characterized in that** the adaptation is carried out by scaling the longitudinal distance (x) of the vehicle (1) from the parking gap (9) with a scaling factor.

8. Method as claimed in any one of claims 6 or 7, **characterized in that** the adaptation is carried out by transforming the angle ($\theta$) between the longitudinal axis of the vehicle (1) and the longitudinal axis of the parking gap (9) to be entered into a system of coordinates whose x axis is scaled with a scaling factor.

9. Method as claimed in any one of claims 6 to 8, **characterized in that** the scaling factor is determined from a ratio of the longitudinal extensions of the present parking gap (9) to the longitudinal extension of the parking gap with the smallest possible longitudinal extension for negotiability.

**10.** Method as claimed in any one of claims 7 to 9,
**characterized in that** the scaling factor is predetermined as a function of the longitudinal extension of the present parking gap (9).

**11.** Method as claimed in any one of the preceding claims,
**characterized in that** for a set of present values of the first vehicle quantities ($\delta$; $\theta$; x), several predetermined sets with neighbouring values for the first vehicle quantities ($\delta$; $\theta$; x) are determined, and **in that** it is found out that the parking gap (9) is non-negotiable when the minimum value ($y_{min}(\delta,\theta,x)$) of the second vehicle quantity (y) indicated for one of the established predetermined sets exceeds the present value of the second vehicle quantity (y).

**12.** Method as claimed in any one of the preceding claims,
**characterized in that** for a set of present values of the first vehicle quantities ($\delta$; $\theta$; x), several predetermined sets with neighbouring values for the first vehicle quantities ($\delta$; $\theta$; x) are determined, and **in that** it is found out that the parking gap (9) is non-negotiable when the maximum value ($y_{max}(\delta,\theta,x)$) of the second vehicle quantity (y) indicated for one of the established predetermined sets is lower than the present value of the second vehicle quantity (y).

**13.** Method as claimed in any one of the preceding claims,
**characterized in that** after having passed by the parking gap (9), it is checked in each case for successive points of a path of the vehicle (1), whether it is possible to enter the parking gap (1) from the said points, given the present yaw angle ($\theta$) between the longitudinal axis of the vehicle (1) and the longitudinal axis of the parking gap (9) to be entered and the present steering angle ($\delta$).

**14.** Method as claimed in any one of the preceding claims,
**characterized in that** during travel of the vehicle (1) in a first driving direction, the steering angle values of the steering angle ($\delta$) adjusted by the driver at the steerable wheels and the values of the lateral distance (y) and the longitudinal distance (x) of the vehicle (1) which pertain to the steering angle values are saved after it has been established that the second vehicle quantity (y) has fallen below the minimum value ($y_{min}(\delta,\theta,x)$) indicated by a first characteristic diagram (($y_{min}(\delta,\theta,x)$) or has exceeded the maximum value ($y_{max}(\delta,\theta,x)$) indicated by a second characteristic diagram ($y_{max}(\delta,\theta,x)$).

**15.** Method as claimed in claim 13,
**characterized in that** during travel of the vehicle (1) in a second driving direction, the saved steering angle value for the steering angle ($\delta$) of the steerable wheels (2a, 2b) of the vehicle (1) is adjusted by means of a steering angle adjusting device (5) when the lateral distance (y) and the longitudinal distance (x) of the vehicle (1) from the parking gap (9) adopt the values saved with respect to the steering angle value.

**16.** Method as claimed in claim 13 or 14,
**characterized in that** the saved steering angle values for the steering angle ($\delta$) are adjusted by means of the steering angle adjusting device (5) after the driver has stopped the vehicle (1).

**17.** Parking assist device for determining the ability to enter a parking gap starting from an initial position of a vehicle,
**characterized in that** it comprises a memory in which two characteristic diagrams ($y_{min}(\delta,\theta,x)$; $y_{max}(\delta,\theta,x)$) are saved, and a first characteristic diagram ($y_{min}(\delta,\theta,x)$ indicates respectively one minimum value ($y_{min}(\delta,\theta,x)$) of a second vehicle quantity (y) and a second characteristic diagram $y_{max}(\delta,\theta,x)$) indicates respectively one maximum value ($y_{max}(\delta,\theta,x)$) of the second vehicle quantity (y) for several predetermined sets of values of first vehicle quantities ($\delta$; $\theta$; x), and with the first vehicle quantities ($\delta$; $\theta$; x) and the second vehicle quantity (y) being selected from the group comprising a longitudinal distance (x) and a lateral distance (y) of the vehicle (1) from the parking gap (9), an angle ($\theta$) between a longitudinal axis of the vehicle (1) and a longitudinal axis of the parking gap (9) to be entered as well as a steering angle ($\delta$) at steerable wheels (2a, 2b) of the vehicle (1), and in which case the negotiability of the parking gap (9) is established when the present value of the second vehicle quantity (y) lies between the minimum value ($y_{min}(\delta,\theta,x)$) of the second vehicle quantity (y) that is indicated by the characteristic diagrams $y_{min}(\delta,\theta,x)$; $y_{max}(\delta,\theta,x)$) for the present values of the first vehicle quantities ($\delta$; $\theta$; x) and the maximum value ($y_{max}(\delta,\theta,x)$) of the second vehicle quantity (y).

**Revendications**

1. Procédé pour déterminer la possibilité de se garer dans un créneau de stationnement à partir d'une position initiale d'un véhicule,
   **caractérisé**
   **en ce que** la possibilité de se garer est déterminée à l'aide de deux champs caractéristiques ($y_{min}(\delta,\theta,x)$; $y_{max}(\delta,\theta, x)$), les champs caractéristiques étant mémorisées dans une unité de commande du véhicule et pour plusieurs ensembles prédéfinis de valeurs de premières grandeurs de véhicule ($\delta$; $\theta$; x) un premier champ caractéristique ($y_{min}(\delta,\theta,x)$) indique chaque fois une valeur minimale ($y_{min}(\delta,\theta,x)$) d'une seconde grandeur de véhicule (y), et un second champ caractéristique ($y_{max}(\delta,\theta,x)$) indique chaque fois une valeur maximale ($y_{max}(\delta,\theta,x)$) de la seconde grandeur de véhicule (y), les premières grandeurs de véhicule ($\delta$; $\theta$; x) et la seconde grandeur de véhicule (y) étant choisies dans le groupe comprenant une distance longitudinale (x) et une distance latérale (y) du véhicule (1) par rapport au créneau de stationnement (9), un angle ($\theta$) entre un axe longitudinal du véhicule (1) et un axe longitudinal du créneau de stationnement (9) où se garer ainsi qu'un angle de braquage ($\delta$) des roues directrices (2a, 2b) du véhicule (1), et la possibilité de se garer dans le créneau de stationnement (9) étant constatée lorsque la valeur présente de la seconde grandeur de véhicule (y) se situe entre la valeur minimale ($y_{min}(\delta,\theta,x)$) indiquée par les champs caractéristiques ($y_{min}(\delta,\theta,x)$ ; $y_{max}(\delta,\theta,x)$) pour les présentes valeurs des premières grandeurs de véhicule ($\delta$; $\theta$; x), de la seconde grandeur de véhicule (y), et la valeur maximale ($y_{max}(\delta,\theta,x)$) de la seconde grandeur de véhicule (y).

2. Procédé selon la revendication 1,
   **caractérisé**
   **en ce que** la seconde grandeur de véhicule (y) est la distance latérale (y) du véhicule (1) par rapport au créneau de stationnement (9).

3. Procédé selon l'une quelconque des revendications précédentes,
   **caractérisé**
   **en ce que** les premières grandeurs de véhicule ($\delta$; $\theta$; x) sont la distance longitudinale (x) du véhicule (1) par rapport au créneau de stationnement (9) et l'angle ($\theta$) entre l'axe longitudinal du véhicule (1) et l'axe longitudinal du créneau de stationnement (9) où se garer.

4. Procédé selon l'une quelconque des revendications précédentes,
   **caractérisé**
   **en ce que** les premières grandeurs de véhicule ($\delta$; $\theta$; x) sont la distance longitudinale (x) du véhicule (1) par rapport au créneau de stationnement (9), l'angle ($\theta$) entre l'axe longitudinal du véhicule (1) et l'axe longitudinal du créneau de stationnement (9) où se garer et l'angle de braquage ($\delta$) des roues directrices (2a, 2b) du véhicule (1).

5. Procédé selon l'une quelconque des revendications précédentes,
   **caractérisé**
   **en ce que** les valeurs minimales ($y_{min}(\delta,\theta,x)$) et les valeurs maximales ($y_{max}(\delta,\theta,x)$) , indiquées par les champs caractéristiques ($y_{min}(\delta,\theta,x)$ ; $y_{max}(\delta,\theta,x)$) pour la seconde grandeur de véhicule (y) se rapportent au fait de se garer dans un créneau de stationnement avec la plus petite étendue longitudinale possible pour s'y garer.

6. Procédé selon la revendication 5,
   **caractérisé**
   **en ce qu'**il est procédé à une adaptation des champs caractéristiques ($y_{min}(\delta,\theta,x)$ ; $y_{max}(\delta,\theta,x)$) à l'étendue longitudinale du présent créneau de stationnement (9).

7. Procédé selon la revendication 6,
   **caractérisé**
   **en ce que** l'adaptation s'effectue en ce que la distance longitudinale (x) du véhicule (1) par rapport au créneau de stationnement (9) est graduée avec un facteur de graduation.

8. Procédé selon l'une des revendications 6 ou 7,
   **caractérisé**
   **en ce que** l'adaptation s'effectue en ce qu'un angle ($\theta$) entre l'axe longitudinal du véhicule (1) et l'axe longitudinal du créneau de stationnement (9) où se garer est transformé en un système de coordonnées dont l'axe (x) est gradué avec un facteur de graduation.

**9.** Procédé selon l'une quelconque des revendications 6 à 8,
**caractérisé**
**en ce que** le facteur de graduation est déterminé à partir d'un rapport entre les étendues longitudinales du présent créneau de stationnement (9) et l'étendue longitudinale du créneau de stationnement avec la plus petite étendue longitudinale possible pour s'y garer.

**10.** Procédé selon l'une quelconque des revendications 7 à 9,
**caractérisé**
**en ce que** le facteur de graduation est prédéfini en tant que fonction de l'étendue longitudinale du présent créneau de stationnement (9).

**11.** Procédé selon l'une quelconque des revendications précédentes,
**caractérisé**
**en ce que** pour un ensemble de présentes valeurs des premières grandeurs de véhicule ($\delta$; $\theta$; x) plusieurs ensembles prédéfinis avec des valeurs voisines sont déterminés pour les premières grandeurs de véhicule ($\delta$; $\theta$; x), et en ce qu'il est constaté qu'il n'est pas possible de se garer dans le créneau de stationnement (9) si la valeur minimale ($y_{min}(\delta,\theta,x)$), indiquée pour l'un des ensembles prédéfinis déterminés, de la seconde grandeur de véhicule (y), est supérieure à la présente valeur de la seconde grandeur de véhicule (y).

**12.** Procédé selon l'une quelconque des revendications précédentes,
**caractérisé**
**en ce que** pour un ensemble de présentes valeurs des premières grandeurs de véhicule ($\delta$; $\theta$; x) plusieurs ensembles prédéfinis avec des valeurs voisines sont déterminés pour les premières grandeurs de véhicule ($\delta$; $\theta$; x), et en ce qu'il est constaté qu'il n'est pas possible de se garer dans le créneau de stationnement (9) si la valeur maximale ($y_{max}(\delta,\theta,x)$), indiquée pour l'un des ensembles prédéfinis déterminés, de la seconde grandeur de véhicule (y), est inférieure à la présente valeur de la seconde grandeur de véhicule (y).

**13.** Procédé selon l'une quelconque des revendications précédentes,
**caractérisé**
**en ce qu'**il est vérifié à chaque fois, après traversée du créneau de stationnement (9) pour des points successifs d'une trajectoire du véhicule (1), s'il est possible de se garer dans le créneau de stationnement (1), à partir des points, dans le cas du présent angle ($\theta$) entre l'axe longitudinal du véhicule (1) et, l'axe longitudinal du créneau de stationnement (9) où se garer et du présent angle de braquage ($\delta$).

**14.** Procédé selon l'une quelconque des revendications précédentes,
**caractérisé**
**en ce que** pendant un trajet du véhicule (1) dans une première direction de marche, les valeurs d'angle de braquage de l'angle de braquage ($\delta$) réglé par le conducteur sur les roues directrices, et les valeurs, faisant partie des valeurs d'angle de braquage, de la distance latérale (y) et de la distance longitudinale (x) du véhicule (1), sont mémorisées, après qu'il a été constaté que la seconde grandeur de véhicule (y) a sous-dépassé la valeur minimale ($y_{min}(\delta,\theta,x)$), indiquée par un premier champ caractéristique ($y_{min}(\delta,\theta,x)$), ou a dépassé la valeur maximale ($y_{max}(\delta,\theta,x)$), indiquée par un second champ caractéristique ($y_{max}(\delta,\theta,x)$).

**15.** Procédé selon la revendication 13,
**caractérisé**
**en ce que** pendant un trajet du véhicule (1) dans une seconde direction de marche, il est réglé, au moyen d'un dispositif de réglage d'angle de braquage (5), la valeur d'angle de braquage mémorisée pour l'angle de braquage ($\delta$) des roues directrices (2a, 2b) du véhicule (1), lorsque la distance latérale (y) et la distance longitudinale (x) du véhicule (1) par rapport au créneau de stationnement (9), prennent les valeurs mémorisées pour la valeur d'angle de braquage.

**16.** Procédé selon la revendication 13 ou 14,
**caractérisé**
**en ce que** les valeurs d'angle de braquage mémorisées pour l'angle de braquage ($\delta$) sont réglées au moyen du dispositif de réglage d'angle de braquage (5), après que le véhicule (1) a été arrêté par le conducteur.

**17.** Dispositif d'aide au stationnement pour déterminer la possibilité de se garer dans un créneau de stationnement à partir d'une position initiale d'un véhicule,

**caractérisé**

**en ce qu'**il contient une mémoire dans laquelle sont mémorisés deux champs caractéristiques ($y_{min}(\delta,\theta,x)$ ; $y_{max}(\delta,\theta,x)$), pour plusieurs ensembles prédéfinis de valeurs de premières grandeurs de véhicule ($\delta$; $\theta$; x), un premier champ caractéristique ($y_{min}(\delta,\theta,x)$) indiquant chaque fois une valeur minimale ($y_{min}(\delta,\theta,x)$) d'une seconde grandeur de véhicule (y), et un second champ caractéristique ($y_{max}(\delta,\theta,x)$) indiquant chaque fois une valeur maximale ($y_{max}(\delta,\theta,x)$) de la seconde grandeur de véhicule (y), et les premières grandeurs de véhicule ($\delta$; $\theta$; x) et la seconde grandeur de véhicule (y) étant choisies dans le groupe comprenant une distance longitudinale (x) et une distance latérale (y) du véhicule (1) par rapport au créneau de stationnement (9), un angle ($\theta$) compris entre un axe longitudinal du véhicule (1) et un axe longitudinal du créneau de stationnement (9) où se garer, ainsi qu'un angle de braquage ($\delta$) de roues directrices (2a, 2b) du véhicule (1), et la possibilité de se garer dans le créneau de stationnement (9) étant constatée si la présente valeur de la seconde grandeur de véhicule (y) se situe entre la valeur minimale ($y_{min}(\delta,\theta,x)$) de la seconde grandeur de véhicule (y), qui est indiquée pour les présentes valeurs des premières grandeurs de véhicule ($\delta$; $\theta$; x) par les champs caractéristiques ($y_{min}(\delta,\theta,x)$; $y_{max}(\delta,\theta,x)$), et la valeur maximale ($y_{max}(\delta,\theta,x)$) de la seconde grandeur de véhicule (y).

Fig. 1

$y_{max}(\delta,\theta,x)$

$y_B(x)$

$y_{min}(\delta,\theta,x)$

1

10

9

11

Fig. 2

EP 1 827 950 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2728859 A
- DE 19922173 A1
- WO 2005085043 A
- DE 102005006966 A1